# FASCICULE DE BREVET EUROPEEN

(11) **EP 2 443 331 B1**
(45) Date de publication et mention de la délivrance du brevet: **19.12.2018**
(21) Numéro de dépôt: 10738002.4
(22) Date de dépôt: 14.06.2010
(51) Int. Cl.: F02C 6/16, F28D 17/00, F28D 20/00, F04D 25/00, F04D 29/58

(54) **RÉGULATION DE LA TEMPÉRATURE D'UN RÉGÉNÉRATEUR THERMIQUE UTILISÉ DANS UNE INSTALLATION DE STOCKAGE D'ÉNERGIE PAR COMPRESSION ADIABATIQUE D'AIR**
TEMPERATUREINSTELLUNG EINES WÄRMEREGENERATORS IN EINER VORRICHTUNG ZUR STROMSPEICHERUNG DURCH ADIABATISCHE LUFTKOMPRESSION
TEMPERATURE ADJUSTMENT IN A HEAT REGENERATOR USED IN EQUIPMENT FOR STORING ENERGY BY ADIABATIC AIR COMPRESSION

(30) Priorité: 18.06.2009 FR 0954102
(43) Date de publication de la demande: 25.04.2012
(73) Titulaire: ENGIE, 92400 Courbevoie (FR)
(72) Inventeur: CANAL, Patrick, F-94300 Vincennes (FR); NADAU, Lionel, F-75018 Paris (FR)
(74) Mandataire: Boura, Olivier
(86) Numéro de dépôt international: PCT/FR2010/051178
(87) Numéro de publication internationale: WO 2010/146292

(56) Documents cités:
- US-A- 3 677 008
- US-A- 3 872 673
- US-A- 4 147 204
- US-A- 4 150 547

## Description

### Arrière-plan de l'invention

La présente invention se rapporte au domaine général du stockage de masse d'énergie par compression d'air. Elle vise plus particulièrement le contrôle de la température d'un régénérateur thermique utilisé dans une installation de stockage d'énergie par compression adiabatique d'air.

Le stockage d'énergie par compression d'air consiste à stocker de l'air comprimé pour l'utiliser ultérieurement comme source d'énergie mécanique. Typiquement, les installations qui sont utilisées pour ce type de stockage d'énergie sont soumises à des cycles successifs de fonctionnement, chaque cycle de fonctionnement comprenant une phase de compression au cours de laquelle de l'air est comprimé à haute pression et stocké dans une cavité de stockage, et une phase de détente pendant laquelle de l'électricité est produite par détente de l'air comprimé dans des turbines à air entraînant des alternateurs.

Le principe du stockage d'énergie par compression d'air est de tirer profit des écarts de prix de l'électricité entre les heures dites « creuses » durant lesquelles les tarifs de l'électricité sont les moins chers, et les heures dites « pleines » durant lesquelles les tarifs sont les plus chers. En effet, les phases de compression consommant de l'électricité sont avantageusement réalisées à moindres coûts pendant les heures creuses, tandis que les phases de détente produisant de l'électricité le sont pendant les heures pleines afin de fournir de l'électricité qui est injectée dans les réseaux de transport d'électricité aux tarifs les plus avantageux.

Il existe différents types d'installations de stockage d'énergie par compression d'air. Certaines de ces installations sont dites « diabatiques » car elles ne récupèrent pas la chaleur issue de la compression de l'air pendant les phases de compression. Pour cette raison, elles présentent un rendement électrique relativement faible (inférieur à 50%). Elles sont par ailleurs polluantes car elles rejettent des émissions de CO₂ issues de la combustion d'une énergie fossile utilisée de façon obligatoire pour préchauffer l'air avant son aspiration par les turbines à air lors des phases de détente. Ces installations diabatiques répondent donc mal aux nouvelles exigences communautaires en matière de performances énergétiques, économiques et environnementales qui imposent de mettre en oeuvre des installations énergétiques à haut rendement et respectueuses de l'environnement.

Pour pallier ces inconvénients, il a été proposé des installations de stockage d'énergie par compression adiabatique d'air (également appelées AA-CAES pour « Advanced Adiabatic Compressed Air Energy Storage », c'est-à-dire « stockage avancé d'énergie par compression adiabatique d'air »). Ce type d'installation présente la particularité de récupérer la chaleur de compression dans un stockage thermique réversible opéré à haute température. A cet effet, un régénérateur thermique équipant les installations permet, d'une part de récupérer et stocker l'énergie thermique générée par la compression - avant son stockage dans la cavité - et d'autre part de restituer cette énergie thermique au flux d'air détendu pour le réchauffer avant qu'il n'alimente les turbines à air. Le recours à un régénérateur thermique permet ainsi aux installations de fonctionner sans émissions de CO₂ et de porter leur rendement électrique à plus de 70%. Le document US 4 147 204 décrit une telle installation de stockage d'énergie.

Dans ces installations, le régénérateur a la particularité d'être soumis en alternance au même flux d'air qui circule dans un sens puis dans l'autre : le flux d'air comprimé qui traverse le régénérateur au cours des phases de compression en cédant son énergie thermique est le même que celui qui le traverse pour être réchauffé au cours des phases de détente qui alternent avec les phases de compression. Dans ces conditions, la température de l'air en sortie de régénérateur (en phase de compression) est influencée par la température d'entrée de l'air en phase de détente. Or, sans une régulation efficace du régénérateur, ce dernier, dont la quantité de chaleur soutirée pendant les phases de détente ne compense pas malgré les pertes aux parois la quantité de chaleur emmagasinée pendant les phases de compression, va voir la température d'air en sortie du régénérateur pendant la compression augmenter progressivement au cours des cycles successifs de fonctionnement de l'installation. Cette hystérèse de température n'est pas acceptable car des températures de l'air au-delà d'un seuil critique (de l'ordre de 50°C) à l'entrée de la cavité de stockage ne sont pas admissibles. Le dépassement de ce seuil impose un arrêt immédiat du fonctionnement de l'installation sous peine de dégrader rapidement la couche organique de la cavité de stockage (sous l'effet d'un échauffement excessif), voire le flambage de l'acier entrant dans sa conception (par dépassement de la résistance mécanique suite à un dépassement des limites de déformation plastique). D'autre part, une surchauffe progressive et irréversible du régénérateur rend impossible tout contrôle des températures de sortie.

Pour ces raisons, un régénérateur thermique utilisé dans une installation de stockage de masse d'énergie par compression adiabatique d'air doit assurer une double fonction thermique. D'une part, il doit permettre le stockage de la quasi-totalité de la chaleur générée par les compresseurs dans des conditions de réversibilité thermodynamique optimales. D'autre part, il doit assurer un contrôle de la température de sortie de l'air dans des plages étroites (pendant les phases de compression et de détente) pour garantir des fonctionnements et une intégrité des équipements (tels que les compresseurs, les turbines à air et la cavité de stockage).

### Objet et résumé de l'invention

La présente invention a donc pour but principal de pallier de tels inconvénients en proposant un procédé de régulation du régénérateur thermique permettant de remplir efficacement sur un grand nombre de cycles de fonctionnement les deux fonctions thermiques précédemment citées.

Ce but est atteint grâce à un procédé de régulation de la température d'un régénérateur thermique utilisé dans une installation de stockage d'énergie par compression adiabatique d'air, le régénérateur thermique comprenant une couche de matériau réfractaire pour le stockage de chaleur sensible qui est disposée verticalement entre une boîte de distribution supérieure et une boîte de distribution inférieure, le régénérateur thermique étant soumis à des cycles successifs de fonctionnement, chaque cycle de fonctionnement comprenant une phase de compression au cours de laquelle un flux d'air chaud pénètre dans le régénérateur par sa boîte de distribution supérieure et traverse de part en part la couche de matériau réfractaire pour ressortir par la boîte de distribution inférieure en ayant cédé son énergie thermique, suivie d'une phase de détente au cours de laquelle un flux d'air froid pénètre dans le régénérateur par sa boîte de distribution inférieure et traverse de part en part la couche de matériau réfractaire pour ressortir par la boîte de distribution supérieure en ayant récupéré son énergie thermique, le procédé étant caractérisé en ce qu'il consiste, entre deux cycles successifs de fonctionnement, à refroidir un compartiment inférieur de la couche de matériau réfractaire qui est situé à proximité de la boîte de distribution inférieure pour l'amener à une température qui est compatible avec la plage de températures de l'air sortant du régénérateur thermique requise pendant les phases de compression.

L'invention prévoit de refroidir à la fin des phases de détente et avant la nouvelle phase de compression l'extrémité du régénérateur thermique (c'est-à-dire la portion de matériau réfractaire située à proximité de la boîte de distribution inférieure) pour amener la température du matériau réfractaire à une température qui est compatible avec la plage de températures de l'air sortant du régénérateur thermique requise pendant les phases de compression. De la sorte, toute dérive de température du régénérateur peut être évitée et l'équilibre thermodynamique de l'installation de stockage d'énergie peut ainsi être garanti sur un grand nombre de cycles de fonctionnement, sans devoir refroidir la totalité de la masse de la couche de matériau réfractaire.

Par ailleurs, le fait de refroidir l'extrémité du régénérateur thermique entre deux cycles successifs limite l'évacuation de chaleur au seul étalement du profil de température sur un cycle. Au contraire, il a été constaté que le refroidissement par un dispositif indépendant (tel qu'un échangeur de chaleur) disposé à la sortie du régénérateur aurait évacué une chaleur plus importante et nécessité des volumes de matériau réfractaire plus importants pour stocker la même quantité de chaleur. Par rapport à cette solution, l'invention permet donc de réduire la quantité de chaleur nécessaire à la régulation du régénérateur thermique ce qui augmente le rendement thermique du régénérateur.

Le compartiment inférieur de la couche de matériau réfractaire peut être refroidi par aspersion d'un liquide à une température qui est compatible avec la plage de températures de l'air sortant du régénérateur thermique requise pendant les phases de compression. Ce mode de réalisation présente l'avantage que l'eau utilisée sert également à nettoyer ce compartiment du régénérateur thermique.

Alternativement, le compartiment inférieur de la couche de matériau réfractaire peut être refroidi par injection d'un flux d'air à une température qui est compatible avec la plage de températures de l'air sortant du régénérateur thermique requise pendant les phases de compression.

L'invention a également pour objet un régénérateur thermique pour installation de stockage d'énergie par compression adiabatique d'air, comprenant une couche de matériau réfractaire pour le stockage de chaleur sensible qui est disposée verticalement entre une boîte de distribution supérieure destinée à recevoir un flux d'air chaud pendant des phases de compression et une boîte de distribution inférieure destinée à recevoir un flux d'air froid pendant des phases de détente, caractérisé en ce qu'il comprend en outre des moyens pour refroidir un compartiment inférieur de la couche de matériau réfractaire qui est situé à proximité de la boîte de distribution inférieure pour l'amener à une température qui est compatible avec la plage de températures de l'air sortant du régénérateur thermique requise pendant les phases de compression.

Le régénérateur thermique peut comprendre un circuit de refroidissement liquide du compartiment inférieur de la couche de matériau réfractaire. Dans ce cas, le circuit de refroidissement liquide peut comprendre une rampe d'injecteurs de liquide disposée verticalement au-dessus du compartiment inférieur de la couche de matériau réfractaire, un réservoir disposé au niveau de la boîte de distribution inférieure du régénérateur pour récupérer le liquide injecté, une pompe et un échangeur thermique pour refroidir le liquide provenant du réservoir.

Alternativement, le régénérateur thermique peut comprendre un circuit de refroidissement gazeux du compartiment inférieur de la couche de matériau réfractaire. Dans ce cas, le circuit de refroidissement gazeux peut comprendre un conduit d'air débouchant à ses extrémités dans le régénérateur de part et d'autre du compartiment inférieur de la couche de matériau réfractaire, un ventilateur et un échangeur thermique pour refroidir le flux d'air prélevé au-dessous du compartiment inférieur de la couche de matériau réfractaire.

Par ailleurs, le compartiment inférieur de la couche de matériau réfractaire peut s'étendre verticalement depuis la boîte de distribution inférieure jusqu'à une hauteur correspondant à 10% environ de la hauteur totale de la couche de matériau réfractaire.

L'invention a encore pour objet une installation de stockage d'énergie par compression adiabatique d'air, comprenant au moins un compresseur d'air, une cavité de stockage d'air comprimé reliée au compresseur, et au moins une turbine à air reliée à la cavité de stockage, caractérisée en ce qu'elle comporte au moins un régénérateur thermique tel que défini précédemment qui est relié à la cavité de stockage, au compresseur et à la turbine à air.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue schématique d'une installation de stockage d'énergie par compression adiabatique d'air équipée de régénérateurs thermiques ;
- la figure 2 représente un régénérateur thermique selon un mode de réalisation de l'invention ;
- la figure 3 représente un régénérateur thermique selon un autre mode de réalisation de l'invention ; et
- les figures 4A à 4C représentent des profils de température du régénérateur thermique selon l'invention à différentes phases.

### Description détaillée de modes de réalisation

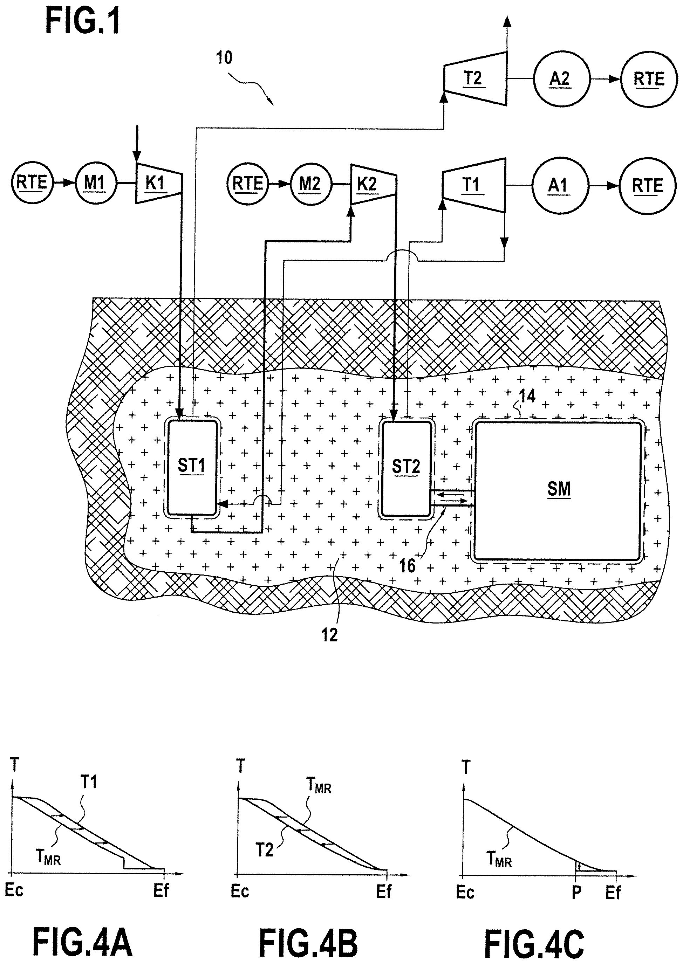

La figure 1 représente de façon très schématique une installation 10 de stockage de masse (c'est-à-dire de plusieurs GW thermiques) d'énergie par compression adiabatique d'air conforme à l'invention.

Cette installation 10 comprend un ou plusieurs étages de compression (au nombre de deux sur la figure 1, correspondant à un étage de moyenne compression et un étage de haute compression) et un ou plusieurs étages de détente (également au nombre de deux sur la figure 1).

Chaque étage de compression se compose d'un compresseur de type axial ou radial (à savoir un compresseur moyenne compression K1 et un compresseur haute pression K2) qui est commandé par un moteur électrique (respectivement M1, M2), ce dernier étant alimenté en électricité depuis le réseau électrique de transport électrique RTE. De même, chaque étage de détente comporte une turbine à air T1, T2 reliée à un alternateur A1, A2 pour délivrer de l'électricité au réseau de transport électrique RTE.

L'installation 10 comprend également une cavité minée revêtue SM dans laquelle est stocké sous haute pression l'air comprimé par les compresseurs K1, K2. De façon connue, une cavité minée revêtue (ou LRC pour « Lined Rock Cavern ») est une cavité formée par une excavation creusée dans une roche compacte 12 et dont les parois sont munies de revêtements 14 adéquats pour tenir de façon étanche aux hautes pressions. Ce type de cavité constitue une alternative aux cavités salines, nappes aquifère isolées et cavités naturelles ou artificielles qui est particulièrement bien adaptée pour réaliser un stockage d'air opérant à haute pression et totalement étanche.

L'installation 10 selon l'invention comprend encore un régénérateur thermique pour chaque étage de compression/détente (à savoir un régénérateur moyenne pression ST1 et un régénérateur haute pression ST2). Plus précisément, le régénérateur thermique moyenne pression ST1 est intercalé entre la sortie du compresseur moyenne pression K1 et l'entrée du compresseur haute pression K2. Il est également relié à la sortie de la turbine à air T1 et à l'entrée de la turbine à air T2. Quant au régénérateur thermique haute pression ST2, il est intercalé entre la sortie du compresseur haute pression K2 et le conduit d'alimentation 16 de la cavité minée SM. Il est aussi relié à l'entrée de la turbine à air T1. Les régénérateurs thermiques ST1, ST2 sont également enterrés dans des excavations creusées dans la roche 12. Leur structure sera décrite ultérieurement.

Le fonctionnement de l'installation 10 de stockage d'énergie par compression adiabatique d'air découle de manière évidente de ce qui précède. L'installation est soumise à des cycles successifs de fonctionnement, chaque cycle de fonctionnement comprenant une phase de compression (effectuée de préférence pendant les heures creuses de tarification de l'électricité), suivie d'une phase de détente (réalisée de préférence pendant les heures pleines).

Au cours de la phase de compression, le trajet de l'air est le suivant (en traits forts sur la figure 1) : l'air est comprimé par le compresseur moyenne pression K1 jusqu'à un premier niveau de pression (par exemple de l'ordre de 34 bars absolus avec une température d'environ 570°C). Cet air comprimé traverse alors de part en part le régénérateur moyenne pression ST1 à l'intérieur duquel la chaleur de compression est stockée sous forme sensible. Une fois refroidi, l'air comprimé est injecté en entrée du compresseur haute pression K2 pour y être davantage comprimé. A sa sortie, l'air est comprimé à haute pression (par exemple de l'ordre de 150 bars absolus avec une température de 350°C) et traverse de part en part le régénérateur haute pression ST2 pour y céder son énergie thermique qui est stockée sous forme sensible. L'air comprimé à haute pression est alors stocké à basse température (entre 5° et 60°C) dans la cavité SM en empruntant le conduit d'alimentation 16.

Au cours de la phase de détente qui suit, le trajet de l'air est le suivant (en traits fins sur la figure 1) : l'air comprimé à haute pression dans la cavité SM est réinjecté dans le régénérateur haute pression ST2 en suivant le trajet inverse de la phase de compression. L'air comprimé traverse donc de part en part ce régénérateur haute pression ST2 pour récupérer son énergie thermique stockée à l'intérieur de celui-ci. A sa sortie du régénérateur haute pression ST2, l'air comprimé ainsi réchauffé est injecté à l'entrée de la turbine à air T1 pour produire de l'électricité qui alimente le réseau de transport électrique RTE via l'alternateur A1. En sortie de la turbine à air T1, l'air comprimé est alors envoyé vers le régénérateur moyenne pression ST1 qu'il traverse de part en part pour y récupérer son énergie thermique. L'air ainsi réchauffé alimente alors la turbine à air T2 qui produit de l'électricité également injectée dans le réseau de transport électrique RTE (via l'alternateur A1).

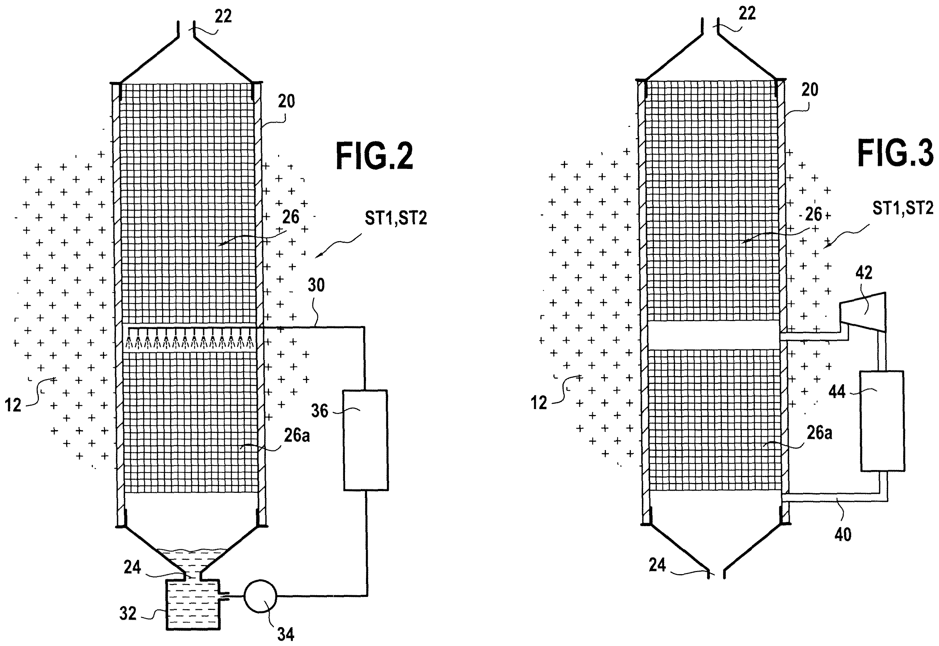

En liaison avec les figures 2 et 3, on décrira maintenant la structure des régénérateurs thermiques ST1, ST2 de l'installation de stockage d'énergie.

Chaque régénérateur ST1, ST2 comprend une virole 20 sensiblement cylindrique qui est disposée verticalement dans une excavation creusée dans la roche 12. Cette virole présente à son extrémité supérieure une boîte de distribution supérieure 22 recevant un flux d'air comprimé chaud pendant les phases de compression, et à son extrémité inférieure une boîte de distribution inférieure 24 recevant un flux d'air détendu froid pendant les phases de détente. Par ailleurs, la virole est remplie d'une couche 26 de matériau réfractaire pour le stockage de chaleur sensible qui est disposée entre ses boîtes de distribution 22, 24, cette couche pouvant être répartie en différents compartiments. Cette couche 26 peut par exemple être constituée par un empilement de briques en céramique qui forment des canaux d'écoulement. D'autres exemples de couches en matériau réfractaire sont bien entendu envisageables (laine de roche, béton réfractaire, etc.).

Au cours d'un cycle de fonctionnement de l'installation, ces régénérateurs ST1, ST2 sont soumis à des contraintes particulières. En effet, on comprend qu'un cycle de fonctionnement tel que décrit précédemment implique que les régénérateurs fonctionnent en circuit fermé (la masse d'air est constante entre les phases de compression et les phases de détente) de sorte que l'équilibre thermodynamique est difficile à satisfaire.

Le fait que cet équilibre thermodynamique ne peut être parfait entraîne au fil des cycles de fonctionnement de l'installation une dérive de température des régénérateurs, ce qui a pour conséquence une augmentation progressive de la température de sortie de l'air pendant les phases de compression.

Afin d'éviter une telle dérive de température, l'invention prévoit, entre deux cycles successifs de fonctionnement, de refroidir (au cours d'une phase de refroidissement) un compartiment (ou portion) inférieur 26a de la couche de matériau réfractaire de chaque régénérateur thermique ST1, ST2 de façon à garantir l'équilibre thermodynamique et à rester dans les plages de température d'air requises en sortie de régénérateur pendant les phases de compression (le compartiment inférieur 26a est une portion de couche située à proximité immédiate de la boîte de distribution inférieure 24 du régénérateur).

A cet effet, dans le mode de réalisation de la figure 2, chaque régénérateur ST1, ST2 comprend un circuit de refroidissement liquide (par exemple à eau) du compartiment inférieur 26a de couche de matériau réfractaire.

Ce circuit de refroidissement à eau comporte notamment une rampe d'injecteurs d'eau 30 qui est disposée verticalement au-dessus du compartiment inférieur 26a de la couche de matériau réfractaire (ce compartiment inférieur 26a est séparé verticalement du reste de la couche de matériau réfractaire dite active qui stocke l'énergie thermique des compresseurs). Un réservoir 32 disposé en sortie de la boîte de distribution inférieure 24 du régénérateur ST1, ST2 permet de récupérer l'eau ayant refroidi le compartiment inférieur 26a de matériau réfractaire. Le circuit de refroidissement à eau comprend encore une pompe 34 qui est activée pendant les phases de refroidissement et un échangeur thermique 36 pour refroidir l'eau provenant du réservoir 32. L'échangeur thermique 36 est plus précisément raccordé à un circuit extérieur mettant en oeuvre des aéro-refroidisseurs ou une réserve d'eau froide (telle qu'un lac ou un réservoir).

L'échangeur thermique 36 est régulé pour obtenir un refroidissement du compartiment inférieur 26a de matériau réfractaire à la température requise. Cette température doit être compatible avec la plage de températures de l'air sortant du régénérateur thermique requise pendant les phases de compression. Elle est par exemple légèrement inférieure à la température moyenne de sortie d'air pendant les phases de compression.

La figure 3 représente un autre mode de réalisation du refroidissement du compartiment inférieur 26a de matériau réfractaire des régénérateurs ST1, ST2. Dans ce mode de réalisation, chaque régénérateur comprend un circuit de refroidissement gazeux (par exemple à air) du compartiment inférieur 26a de matériau réfractaire.

Ce circuit de refroidissement à air comprend notamment un conduit d'air 40 débouchant à ses extrémités dans le régénérateur ST1, ST2 de part et d'autre du compartiment inférieur 26a de couche de matériau réfractaire, un ventilateur de circulation de l'air 42 qui est activé pendant les phases de refroidissement et un échangeur thermique 44 pour refroidir le flux d'air prélevé en sortie de la boîte de distribution inférieure 24.

L'échangeur thermique 44 est régulé pour obtenir un refroidissement du compartiment inférieur 26a de matériau réfractaire à la température requise. Cette température doit être compatible avec la plage de températures de l'air sortant du régénérateur thermique requise pendant les phases de compression.

Il est à noter que la durée de la phase de refroidissement (par aspersion liquide ou refroidissement gazeux) est liée à la quantité de chaleur à dissiper, au débit d'eau ou d'air, ainsi qu'à la température d'entrée de cet eau ou air.

Quel que soit le choix du mode de refroidissement, le dimensionnement du compartiment inférieur 26a de la couche de matériau réfractaire qui est refroidi dépend de nombreux paramètres. A titre d'exemple, celui-ci peut s'étendre verticalement depuis la boîte de distribution inférieure 24 du régénérateur ST1, ST2 jusqu'à une hauteur correspond à 10% environ de la hauteur totale de la couche 26 de matériau réfractaire.

En liaison avec les figures 4A à 4C, on décrira maintenant l'effet de ces phases de refroidissement sur le profil de température du régénérateur thermique.

Ces figures 4A à 4C montrent des courbes de la température T du flux d'air traversant de part en part un régénérateur thermique selon l'invention (entre la boîte de distribution supérieure E_{C} et la boîte de distribution inférieure E_{F} de celui-ci). Ces courbes sont issues de simulations obtenues après un certain nombre de cycles de fonctionnement de l'installation de stockage d'énergie à partir d'une modélisation dynamique monodimensionnelle du régénérateur.

Pendant la phase de compression de l'air (figure 4A), le front thermique T₁ du flux d'air traversant le régénérateur (depuis la boîte de distribution supérieure E_{C} jusqu'à la boîte de distribution inférieure E_{F}) se déplace vers la boîte de distribution inférieure E_{F} du régénérateur (par rapport au profil T_{MR} représentant la température du matériau réfractaire à l'intérieur du régénérateur). Il est à noter que ce déplacement du front thermique ne s'effectue pas en bloc mais il s'y ajoute une déformation engendrée par les retards de transferts thermiques et la diffusion longitudinale de chaleur.

Pendant la phase suivante de détente de l'air (figure 4B), le front thermique T₂ du flux d'air traversant le régénérateur (depuis la boîte de distribution inférieure E_{F} jusqu'à la boîte de distribution supérieure E_{C}) revient vers sa position initiale. Toutefois, en raison des déformations signalées, le profil s'est élargi, si bien que la température au niveau de la boîte de distribution inférieure E_{F} du régénérateur n'a pas retrouvé sa valeur initiale.

Enfin, la phase de refroidissement suivant la phase de détente (figure 4C) permet de ramener la température du compartiment inférieur de matériau réfractaire du régénérateur à la valeur souhaitée (le profil de température correspondant à cette portion est représenté sur la figure 4C entre les points P et E_{F}).

Ainsi, le fait de refroidir le compartiment inférieur de matériau réfractaire entre deux cycles successifs de fonctionnement de l'installation de stockage d'énergie limite l'évacuation de la chaleur à l'étalement du front thermique sur un seul cycle (surplus de chaleur à évacuer pour obtenir un fonctionnement thermodynamiquement réversible du régénérateur). Par ailleurs, on constate sur ces courbes des figures 4A à 4C que le refroidissement par un dispositif indépendant (tel qu'un échangeur de chaleur) disposé à la sortie du régénérateur aurait nécessité l'évacuation de chaleur dans des proportions plus importantes. Le refroidissement tel que proposé par l'invention présente donc un rendement thermodynamique global plus élevé dans la mesure où la chaleur à évacuer est plus faible.

## Revendications

1. Procédé de régulation de la température d'un régénérateur thermique (ST1, ST2) utilisé dans une installation (10) de stockage d'énergie par compression adiabatique d'air, le régénérateur thermique comprenant une couche de matériau réfractaire (26) pour le stockage de chaleur sensible qui est disposée verticalement entre une boîte de distribution supérieure (22) et une boîte de distribution inférieure (24), le régénérateur thermique étant soumis à des cycles successifs de fonctionnement, chaque cycle de fonctionnement comprenant une phase de compression au cours de laquelle un flux d'air chaud pénètre dans le régénérateur par sa boîte de distribution supérieure et traverse de part en part la couche de matériau réfractaire pour ressortir par la boîte de distribution inférieure en ayant cédé son énergie thermique, suivie d'une phase de détente au cours de laquelle un flux d'air froid pénètre dans le régénérateur par sa boîte de distribution inférieure et traverse de part en part la couche de matériau réfractaire pour ressortir par la boîte de distribution supérieure en ayant récupéré son énergie thermique, le procédé étant **caractérisé en ce qu'**il consiste, entre deux cycles successifs de fonctionnement, à refroidir un compartiment inférieur (26a) de la couche de matériau réfractaire (26) qui est situé à proximité de la boîte de distribution inférieure (24) pour l'amener à une température qui est compatible avec la plage de températures de l'air sortant du régénérateur thermique requise pendant les phases de compression.

2. Procédé selon la revendication 1, dans lequel le compartiment inférieur (26a) de la couche de matériau réfractaire (26) est refroidi par aspersion d'un liquide à une température qui est compatible avec la plage de températures de l'air sortant du régénérateur thermique requise pendant les phases de compression.

3. Procédé selon la revendication 1, dans lequel le compartiment inférieur (26a) de la couche de matériau réfractaire (26) est refroidi par injection d'un flux d'air à une température qui est compatible avec la plage de températures de l'air sortant du régénérateur thermique requise pendant les phases de compression.

4. Régénérateur thermique (ST1, ST2) pour installation (10) de stockage d'énergie par compression adiabatique d'air, comprenant une couche de matériau réfractaire (26) pour le stockage de chaleur sensible qui est disposée verticalement entre une boîte de distribution supérieure (22) destinée à recevoir un flux d'air chaud pendant des phases de compression et une boîte de distribution inférieure (24) destinée à recevoir un flux d'air froid pendant des phases de détente, **caractérisé en ce qu'**il comprend en outre des moyens (30 ; 40) pour refroidir un compartiment inférieur (26a) de la couche de matériau réfractaire qui est situé à proximité de la boîte de distribution inférieure pour l'amener à une température qui est compatible avec la plage de températures de l'air sortant du régénérateur thermique requise pendant les phases de compression.

5. Régénérateur thermique selon la revendication 4, comprenant un circuit de refroidissement liquide du compartiment inférieur (26a) de la couche de matériau réfractaire.

6. Régénérateur thermique selon la revendication 5, dans lequel le circuit de refroidissement liquide comprend une rampe d'injecteurs (30) de liquide disposée verticalement au-dessus du compartiment inférieur (26a) de la couche de matériau réfractaire, un réservoir (32) disposé au niveau de la boîte de distribution inférieure (24) du régénérateur pour récupérer le liquide injecté, une pompe (34) et un échangeur thermique (36) pour refroidir le liquide provenant du réservoir.

7. Régénérateur thermique selon la revendication 4, comprenant un circuit de refroidissement gazeux du compartiment inférieur (26a) de la couche de matériau réfractaire.

8. Régénérateur thermique selon la revendication 7, dans lequel le circuit de refroidissement gazeux comprend un conduit d'air (40) débouchant à ses extrémités dans le régénérateur de part et d'autre du compartiment inférieur (26a) de la couche de matériau réfractaire, un ventilateur (42) et un échangeur thermique (44) pour refroidir le flux d'air prélevé au-dessous du compartiment inférieur de la couche de matériau réfractaire.

9. Régénérateur thermique selon l'une quelconque des revendications 4 à 8, dans lequel le compartiment inférieur (26a) de la couche de matériau réfractaire s'étend verticalement depuis la boîte de distribution inférieure (24) jusqu'à une hauteur correspondant à 10% environ de la hauteur totale de la couche de matériau réfractaire (26).

10. Installation (10) de stockage d'énergie par compression adiabatique d'air, comprenant au moins un compresseur d'air (K1, K2), une cavité (SM) de stockage d'air comprimé reliée au compresseur, et au moins une turbine à air (T1, T2) reliée à la cavité de stockage, **caractérisée en ce qu'**elle comporte au moins un régénérateur thermique (ST1, ST2) selon l'une quelconque des revendications 4 à 9 relié à la cavité de stockage, au compresseur et à la turbine à air.

11. Installation selon la revendication 10, comportant un régénérateur thermique moyenne pression (ST1) relié à des compresseurs moyenne et haute pression (K1, K2) et à deux turbines à air (T1, T2), et un régénérateur thermique haute pression (ST2) relié au compresseur haute pression (K2), à l'une des turbines à air (T1) et à la cavité (SM) de stockage (SM).

## Patentansprüche

1. Verfahren zur Temperatureinstellung eines Wärmeregenerators (ST1, ST2), der in einer Vorrichtung (10) zur Energiespeicherung durch adiabatische Luftkompression verwendet wird, wobei der Wärmeregenerator eine Schicht aus feuerfestem Material (26) zum Speichern von sensibler Wärme umfasst, die vertikal zwischen einem oberen Verteilerkasten (22) und einem unteren Verteilerkasten (24) angeordnet ist, wobei der Wärmeregenerator aufeinanderfolgende Arbeitszyklen durchläuft, wobei jeder Arbeitszyklus eine Verdichtungsphase umfasst, während der ein warmer Luftstrom in den Regenerator über seinen oberen Verteilerkasten eintritt und durch die Schicht aus feuerfestem Material hindurchtritt, um über den unteren Verteilerkasten wieder auszutreten, nachdem er seine Wärmeenergie abgegeben hat, gefolgt von einer Entspannungsphase, während der ein kalter Luftstrom in den Regenerator über seinen unteren Verteilerkasten eintritt und durch die Schicht aus feuerfestem Material hindurchtritt, um über den oberen Verteilerkasten wieder auszutreten, nachdem er seine Wärmeenergie zurückgewonnen hat, wobei das Verfahren **dadurch gekennzeichnet ist, dass** es zwischen zwei aufeinanderfolgenden Arbeitszyklen aus Kühlen eines unteren Abschnitts (26a) der Schicht aus feuerfestem Material (26), der in der Nähe des unteren Verteilerkastens (24) angeordnet ist, besteht, um diesen auf eine Temperatur zu bringen, die mit dem während der Verdichtungsphasen erforderlichen Temperaturbereich der aus dem Wärmeregenerator austretenden Luft kompatibel ist.

2. Verfahren nach Anspruch 1, wobei der untere Abschnitt (26a) der Schicht aus feuerfestem Material (26) durch Besprühen mit einer Flüssigkeit mit einer Temperatur gekühlt wird, die mit dem während der Verdichtungsphasen erforderlichen Temperaturbereich der aus dem Wärmeregenerator austretenden Luft kompatibel ist.

3. Verfahren nach Anspruch 1, wobei der untere Abschnitt (26a) der Schicht aus feuerfestem Material (26) durch Einblasen eines Luftstroms mit einer Temperatur gekühlt wird, die mit dem während der Verdichtungsphasen erforderlichen Temperaturbereich der aus dem Wärmeregenerator austretenden Luft kompatibel ist.

4. Wärmeregenerator (ST1, ST2) für eine Vorrichtung (10) zur Energiespeicherung durch adiabatische Luftkompression, umfassend eine Schicht aus feuerfestem Material (26) zum Speichern von sensibler Wärme, die vertikal zwischen einem oberen Verteilerkasten (22), der zum Aufnehmen eines warmen Luftstroms während Verdichtungsphasen vorgesehen ist, und einem unteren Verteilerkasten (24), der zum Aufnehmen eines kalten Luftstroms während Entspannungsphasen vorgesehen ist, angeordnet ist, **dadurch gekennzeichnet, dass** er ferner Mittel (30; 40) zum Kühlen eines unteren Abschnitts (26a) der Schicht aus feuerfestem Material umfasst, der in der Nähe des unteren Verteilerkastens angeordnet ist, um diesen auf eine Temperatur zu bringen, die mit dem während der Verdichtungsphasen erforderlichen Temperaturbereich der aus dem Wärmeregenerator austretenden Luft kompatibel ist.

5. Wärmeregenerator nach Anspruch 4, umfassend einen Flüssigkeitskühlkreis des unteren Abschnitts (26a) der Schicht aus feuerfestem Material.

6. Wärmeregenerator nach Anspruch 5, wobei der Flüssigkeitskühlkreis eine Flüssigkeitseinspritzleiste (30), die vertikal über dem unteren Abschnitt (26a) der Schicht aus feuerfestem Material angeordnet ist, einen Behälter (32), der auf Höhe des unteren Verteilerkastens (24) des Regenerators angeordnet ist, um die eingespritzte Flüssigkeit zurückzugewinnen, eine Pumpe (34) und einen Wärmetauscher (36) zum Kühlen der aus dem Behälter kommenden Flüssigkeit umfasst.

7. Wärmeregenerator nach Anspruch 4, umfassend einen Gaskühlkreis des unteren Abschnitts (26a) der Schicht aus feuerfestem Material.

8. Wärmeregenerator nach Anspruch 7, wobei der Gaskühlkreis eine Luftleitung (40), die an ihren Enden zum einen in den Regenerator und zum anderen in den unteren Abschnitt (26a) der Schicht aus feuerfestem Material mündet, ein Gebläse (42) und einen Wärmetauscher (44) zum Kühlen des unterhalb des unteren Abschnitts der Schicht aus feuerfestem Material austretenden Luftstroms umfasst.

9. Wärmeregenerator nach einem der Ansprüche 4 bis 8, wobei sich der untere Abschnitt (26a) der Schicht aus feuerfestem Material vertikal von dem unteren Verteilerkasten (24) bis auf eine Höhe erstreckt, die etwa 10 % der Gesamthöhe der Schicht aus feuerfestem Material (26) entspricht.

10. Vorrichtung (10) zur Energiespeicherung durch adiabatische Luftkompression, umfassend mindestens einen Luftverdichter (K1, K2), einen Hohlraum (SM) zum Speichern von verdichteter Luft, der mit dem Verdichter verbunden ist, und mindestens eine Luftturbine (T1, T2), die mit dem Speicherhohlraum verbunden ist, **dadurch gekennzeichnet, dass** sie mindestens einen Wärmeregenerator (ST1, ST2) nach einem der Ansprüche 4 bis 9 umfasst, der mit dem Speicherhohlraum, dem Verdichter und der Luftturbine verbunden ist.

11. Vorrichtung nach Anspruch 10, umfassend einen Mitteldruck-Wärmeregenerator (ST1), der mit einem Mittel- und einem Hochdruckverdichter (K1, K2) und zwei Luftturbinen (T1, T2) verbunden ist, und einen Hochdruck-Wärmeregenerator (ST2), der mit dem Hochdruckverdichter (K2), einer der Luftturbinen (T1) und dem Speicherhohlraum (SM) verbunden ist.

## Claims

1. A method of regulating the temperature of a heat regenerator (ST1, ST2) used in an installation (10) for storing energy by adiabatic compression of air, the heat regenerator comprising a layer of refractory material (26) for storing sensible heat, which layer is arranged vertically between a top distribution box (22) and a bottom distribution box (24), the heat regenerator being subjected to successive operating cycles, each operating cycle comprising a compression stage during which a stream of hot air penetrates into the regenerator via its top distribution box and passes right through the layer of refractory material in order to leave via the bottom distribution box after yielding its heat energy, followed by an expansion stage during which a stream of cold air penetrates into the regenerator via its bottom distribution box and passes right through the layer of refractory material in order to leave via the top distribution box after recovering its heat energy, the method being **characterized in that** it consists, between two successive operating cycles, in cooling a bottom compartment (26a) of the layer of refractory material (26) that is situated in the proximity of the bottom distribution box (24) in order to bring it to a temperature that is compatible with the required temperature range for air leaving the heat regenerator during the compression stages.

2. A method according to claim 1, wherein the bottom compartment (26a) of the layer of refractory material (26) is cooled by spraying a liquid at a temperature that is compatible with the required temperature range for the air leaving the heat regenerator during the compression stages.

3. A method according to claim 1, wherein the bottom compartment (26a) of the layer of refractory material (26) is cooled by injecting a stream of air at a temperature that is compatible with the required range of temperatures for the air leaving the heat regenerator during the compression stages.

4. A heat regenerator (ST1, ST2) for an installation (10) for storing energy by adiabatic compression of air, the regenerator comprising a layer of refractory material (26) for storing sensible heat, which layer is arranged vertically between a top distribution box (22) for receiving a stream of hot air during compression stages and a bottom distribution box (24) for receiving a stream of cold air during expansion stages, the regenerator being **characterized in that** it further comprises means (30; 40) for cooling a bottom compartment (26a) of the layer of refractory material that is situated in the proximity of the bottom distribution box in order to bring it to a temperature that is compatible with the required range of temperatures for the air leaving the heat regenerator during the compression stages.

5. A heat regenerator according to claim 4, including a liquid cooling circuit for cooling the bottom compartment (26a) of the layer of refractory material.

6. A heat regenerator according to claim 5, wherein the liquid cooling circuit includes a strip (30) of liquid injectors arranged vertically above the bottom compartment (26a) of the layer of refractory material, a tank (32) arranged level with the bottom distribution box (24) of the regenerator in order to recover the injected liquid, a pump (34), and a heat exchanger (36) for cooling the liquid coming from the tank.

7. A heat regenerator according to claim 4, including a gaseous cooling circuit for cooling the bottom compartment (26a) of the layer of refractory material.

8. A heat regenerator according to claim 7, wherein the gaseous cooling circuit comprises an air duct (40) opening out at its ends into the regenerator on either side of the bottom compartment (26a) of the layer of refractory material, a fan (42), and a heat exchanger (44) for cooling the stream of air taken from beneath the bottom compartment of the layer of refractory material.

9. A heat regenerator according to any one of claims 4 to 8, wherein the bottom compartment (26a) of the layer of refractory material extends vertically from the bottom distribution box (24) up to a height that corresponds to about 10% of the total height of the layer of refractory material (26).

10. An installation (10) for storing energy by adiabatic compression of air, the installation comprising at least one air compressor (K1, K2), a compressed air storage cavity (SM) connected to the compressor, and at least one air turbine (T1, T2) connected to the storage cavity, the installation being **characterized in that** it includes at least one heat regenerator (ST1, ST2) according to any one of claims 4 to 9 that is connected to the storage cavity, to the compressor, and to the air turbine.

11. An installation according to claim 10, including a medium-pressure heat regenerator (ST1) connected to medium- and high-pressure compressors (K1, K2) and to two air turbines (T1, T2), and a high-pressure heat regenerator (ST2) connected to the high-pressure compressor (K2), to one of the air turbines (T1), and to the storage cavity (SM).
